# EUROPEAN PATENT APPLICATION

(11) **EP 4 053 971 A1**
(43) Date of publication of application: **07.09.2022**
(21) Application number: 22159386.6
(22) Date of filing: 01.03.2022
(51) Int. Cl.: H01M 10/613, B60K 1/04, B60L 50/64, B60L 53/80, H01M 10/625, H01M 10/643, H01M 10/6561, H01M 50/213, H01M 50/249, H01M 50/258, H01M 50/509

(54) **REMOVABLE AND RECHARGEABLE BATTERY PACK**

(30) Priority: 01.03.2021 IT 202100004673
(71) Applicant: Hype S.r.l., 10141 Torino (IT)
(72) Inventor: PALAZZETTI, MARIO, I-10141 TORINO (IT); SCARCIA, DINO CLAUDIO, I-10141 TORINO (IT)
(74) Representative: Carangelo, Pierluigi

(57) **Abstract**

A rechargeable battery pack (1), comprising:
- a tubular container (2) extending about a containment housing (3) along an axis of main longitudinal extension (X-X);
- a plurality of clusters (4) of rechargeable cells (5), the clusters (4) of said plurality being electrically connected in series with one another and being arranged inside the tubular container (2) axially aligned with one another along said axis of main longitudinal extension (X-X) ;
wherein each cluster (4) comprises a plurality of rechargeable cells (5) arranged around said axis of main longitudinal extension (X-X) connected in parallel with one another and wherein, inside the same cluster (4), the rechargeable cells are arranged parallel to said axis of main longitudinal extension (X-X).

## Description

### FIELD OF THE INVENTION

**The** present invention relates to the technical field of rechargeable batteries and in particular it relates to an extractable rechargeable battery pack which may be used, for example and without introducing any limitation, in electric or hybrid vehicles.

### PRIOR ART

As it is known, the use of rechargeable battery packs is widespread in many technological sectors. Despite this wide diffusion, the known systems for charging or replacing rechargeable battery packs have, however, some drawbacks. This occurs above all, but not exclusively, in cases where the battery packs have a significant size and/or weight.

For example, it is known that electric or hybrid transport vehicles are becoming increasingly popular in the mobility sector.

The aforesaid electric or hybrid transport vehicles comprise at least one rechargeable battery pack adapted to power an electric machine which acts as a single engine in electric vehicles or as an auxiliary engine in hybrid vehicles, in which it is in fact accompanied by a combustion engine. In hybrid vehicles, when the propulsion to the vehicle is provided by the combustion engine, the aforesaid electric machine is used as a generator for charging the battery pack.

The known systems for charging or replacing the rechargeable battery pack of an electric or hybrid vehicle have, however, some drawbacks.

For the charging operations, the use is known of charging stations of the plug-in type, i.e., equipped with a plug connector, generally provided at one end with an electric cable, which is plugged into a charging socket provided on board the hybrid or electric transport vehicle. Such charging stations may be public and, in this case, for example, the stations are arranged in squares or along the edges of roads or in parking lots. In this case, they are outdoor charging stations. Charging stations may also be installed in closed and private places, for example in garages. In this case, they are, instead, indoor charging stations. Charging operations by means of plug-in charging stations are generally slow or are particularly onerous in terms of load exerted on public or domestic electricity networks.

In order to speed up the charging operations and to somehow relieve the load exerted on public or domestic electrical networks, solutions have been developed which provide for a relatively rapid exchange of the discharged battery pack and the replacement thereof as a whole with a charged battery pack. Patent EP3307585B1 describes a possible example of a station for the exchange of a rechargeable battery pack.

**Generally,** in order to exchange the rechargeable battery pack, the latter must be first removed from the vehicle. Then a charged battery pack must be installed on board the vehicle. These operations generally occur in exchange stations which must be equipped with robust and complex lifting/lowering systems for the battery pack, which is generally relatively bulky and heavy. Furthermore, complex transport systems must be provided for moving the battery packs and the charging station for the discharged and charged rechargeable battery packs between warehouses.

Furthermore, the known systems for charging or exchanging the rechargeable battery packs, both in the transport vehicle sector and in other sectors in general, are not very efficient, since they do not allow the elementary batteries which make up the pack, i.e. the rechargeable cells, to be managed individually. For this reason, in the case where the battery pack has to be charged, the presence of unbalanced or damaged rechargeable cells compromises, on the one hand, the effectiveness of the charge of the battery pack and, on the other, the duration of the charge thereof. To cope with these difficulties, equalizers are provided which, in addition to the cost thereof, involve energy losses. In the case where, on the other hand, the battery pack has to be replaced, it is possible that the discharged battery pack is prematurely selected as no longer suitable for charging and therefore indicated as no longer usable. This leads to an economic burden as well as damage from an environmental point of view.

It is a general object of the present invention to provide a rechargeable battery pack which is capable of solving one or more of the drawbacks mentioned above with reference to the rechargeable battery packs of the prior art.

The aforesaid object, as well as other objects which will become apparent below, are achieved by a rechargeable battery pack according to claim 1. Preferred and advantageous embodiments of the aforesaid battery pack are defined in the accompanying dependent claims.

The invention will be better understood from the following detailed description of the particular embodiments thereof, given by way of explanation and, therefore, not by way of limitation, with reference to the accompanying drawings briefly described in the following paragraphs.

### BRIEF DESCRIPTION OF THE DRAWINGS

Figure 1 shows a partial-section diagrammatic side view of an exemplary and non-limiting embodiment of a rechargeable battery pack comprising a plurality of clusters of rechargeable cells forming a prismatic body, in accordance with a first embodiment that may also provide the arrangement side by side of analogous packs.
Figure 2 shows a diagrammatic front view of the rechargeable battery pack of Figure 1.
Figure 3 shows a partial-section side plan view of a second possible embodiment of a cluster of rechargeable cells.
Figure 4 shows a diagrammatic front view of the cluster of rechargeable cells of Figure 3.
Figure 5 shows a diagrammatic side plane view of a possible embodiment of a transport vehicle on which the rechargeable battery pack may be installed.
Figure 6 shows a diagrammatic side view of the transport vehicle during a rechargeable battery pack replacement operation.
Figures 7 and 8 show a diagrammatic side view of the transport vehicle in an embodiment of an operation of replacement of the rechargeable battery pack.

### DETAILED DESCRIPTION

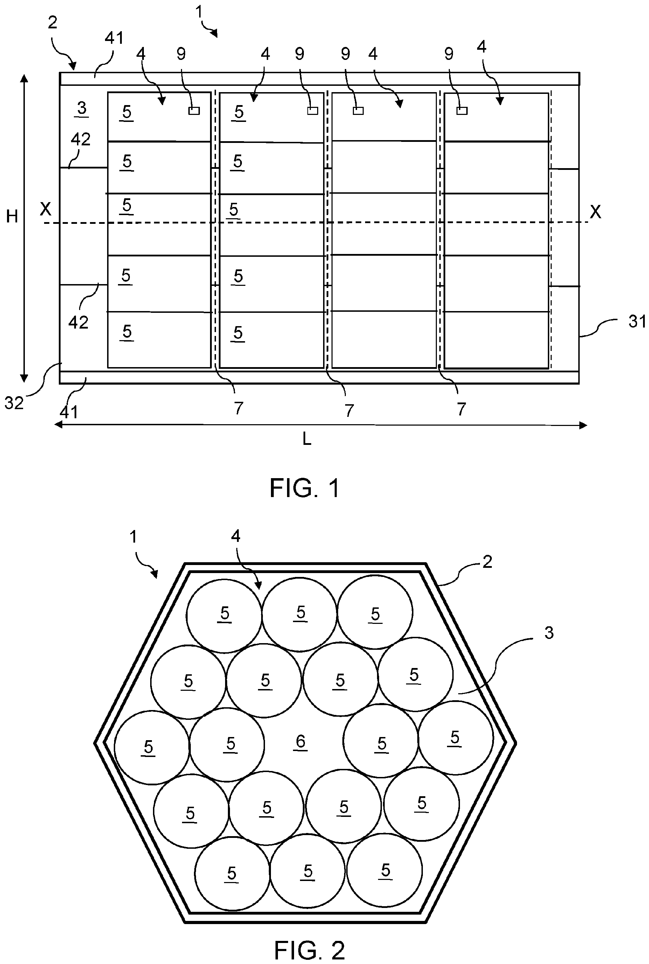

Figure 1 shows an exemplary and non-limiting embodiment of a rechargeable battery pack 1, for example, installable on board electric or hybrid transport vehicles. The rechargeable battery pack 1 comprises a plurality of rechargeable cells 5 electrically interconnected with one another.

It should be noted that Figure 1 may also exclusively show a section of such rechargeable battery pack 1, since the rechargeable battery pack 1 may comprise a much greater number of rechargeable cells 5 and therefore have a length L much greater than the height H. For example, the length L may be equal to or exceed about thirty times the height H, for example equal to forty times the height H.

The rechargeable cells 5 are preferably lithium rechargeable cells. Each rechargeable cell 5 has, preferably and not by way of limitation, a voltage equal to about 4V, for example, a voltage between 3V and 5V, for example, a voltage equal to 3.7V.

Each rechargeable cell 5 preferably, and not by way of limitation, has a length of between 4cm and 8cm and, for example, equal to 6cm. The rechargeable battery pack 1 has, for example, a length L of between 2m and 5m and, for example, equal to 4m.

The rechargeable battery pack 1 comprises a tubular container 2 extending around a containment housing 3 along an axis having a main longitudinal extension X-X of the tubular container 3. The containment housing 3 is transversely delimited by the tubular container 2 for the whole extension of the containment housing 3 along the longitudinal axis X-X, for example is delimited by a radially external wall 41 of the tubular container 2. The tubular container 2 is preferably a rigid container, for example made of a plastic material or a metal material. For example, the tubular container 2 has a circular or polygonal cross-section and is advantageously such as to allow the passage of air through the tubular container 2 for the thermal control of the rechargeable battery pack 1.

The rechargeable battery pack 1 comprises a plurality of clusters 4 of rechargeable cells 5. The clusters 4 of said plurality are electrically connected in series with one another and are arranged inside the tubular container 2 axially aligned with one another along the axis of main longitudinal extension X-X of the tubular container 2.

Each cluster 4 comprises a plurality of rechargeable cells 5 arranged about the axis of main longitudinal extension X-X connected in parallel with one another. Inside the same cluster 4, the rechargeable cells 5 are arranged parallel to the axis of main longitudinal extension X-X of the tubular container 2.

In accordance with a preferred embodiment, inside the same cluster 4, the rechargeable cells 5 form one or more circular or polygonal arrays of rechargeable cells 5. In the case where the same cluster 4 comprises several polygonal or circular arrays of rechargeable cells 5, such arrays are preferably concentric with respect to one another, so as to define at least one radially innermost array and at least one radially outermost array.

In the particular example shown in the Figures, the rechargeable cells 5 form clusters of cells 4 each comprising eighteen rechargeable cells 5 arranged on two concentric polygonal arrays, for example, on two concentric hexagonal arrays. Clearly, each cluster of cells 4 may comprise a greater or lesser number of rechargeable cells 5.

In accordance with a particularly advantageous embodiment, inside the same cluster 4, the rechargeable cells 5 are arranged so as to form a central ventilation channel 6. Preferably, a cooling fluid, for example, air, flows in such central ventilation channel 6. In accordance with a preferred embodiment, a forced flow of a cooling fluid flows in the central ventilation channel 6. In accordance with an advantageous embodiment, the rechargeable battery pack 1 comprises one or more fans accommodated in the tubular container 2, for example acting in the central ventilation channel 6, not shown in the Figures. Such fans, which are, for example, electrically powered by the rechargeable battery pack 1 itself, allow to obtain a forced circulation of the cooling fluid inside the tubular container 2.

In accordance with an embodiment, the rechargeable battery pack 1 comprises a plurality of at least partially elastic electrical interconnection partitions 7, each elastic partition 7 being interposed between two adjacent clusters 4 inside the tubular container 2. Preferably, said electrical interconnection partitions have at least one ventilation hole, for example central, to allow the passage of a ventilation fluid, for example ventilation air. The electrical interconnection partitions 7 are, for example, made of electrically conductive material and are suitably shaped so as to elastically ensure good electrical contacts without being welded.

In accordance with a particularly advantageous embodiment, the clusters of cells 4 are removably housed in the tubular container 2, for example, removably inserted in the latter, to allow the replacement of single rechargeable cells 5 or single clusters of cells 4. Preferably, the clusters of cells 4 may be slidably inserted into the tubular container 2 and may be slidably removed from the tubular container 2. For example, the clusters of cells 4 can be slidably inserted in the tubular container 2 to cross a first opening 31 and can be removed from the tubular container 2 by crossing the same first opening 31 and/or a second opening 32 opposed to the first opening 31 along the axis on main longitudinal extension Z-Z.

In accordance with a possible non-limiting example, by selecting rechargeable cells 5 having a voltage of 3.7V, if the rechargeable battery pack 1 comprises sixty-seven clusters of cells 5 connected in series, the battery pack 1 generates a voltage of 250V and develops a power of 180*250=45kW. In this case, providing that each cluster 4 has eighteen rechargeable cells 5 connected in parallel with one another and supplying 10A each, assuming that the rechargeable cells 5 have a length of 6cm, a diameter of 1.5cm, the width H of the battery pack 1 is equal to about 10cm and the length L of the battery pack 1 is equal to about 4 m.

The rechargeable cells 5 have, for example, a cylindrical or prismatic shape.

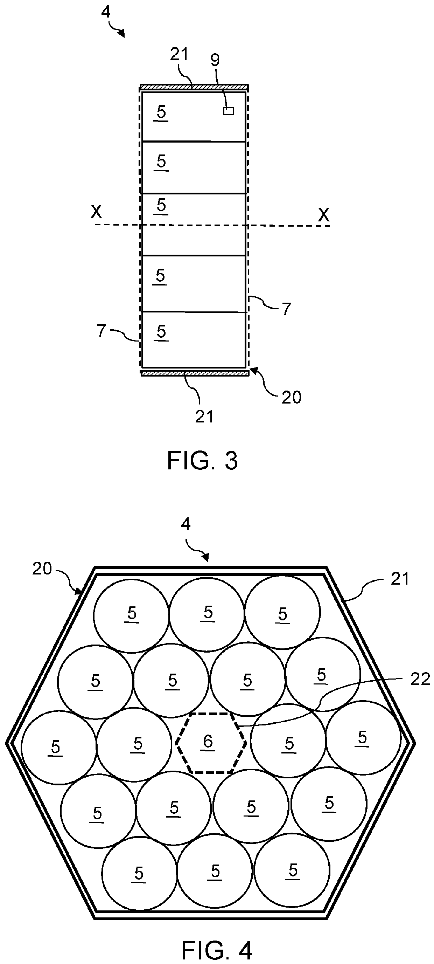

With reference to Figures 3 and 4, an advantageous embodiment of a cluster 4 of rechargeable cells 5 will now be described, which may be employed in the rechargeable battery pack 1 described up to now with reference to Figures 1 and 2. In such embodiment, the cluster 4 comprises a container body 20, adapted to contain and support the rechargeable cells 5 of the cluster 4. The container body 20 of the cluster 4 may be slidably inserted, preferably in a removable manner, into the tubular container 2. In accordance with a particularly advantageous embodiment, the central ventilation channel 6 is defined inside the container body 20 of the cluster 4.

The container body 20 of the cluster 4 comprises, for example, a radially outer wall 21, for example made of electrically insulating plastic material, for example, of hard plastic or a plastic film. The radially external wall 21 is preferably a perforated tubular wall for the passage of the cooling air, or in general of a cooling fluid.

In accordance with a particularly advantageous embodiment, the container body 20 of the cluster 4 comprises a radially inner wall 22. The rechargeable cells 5 of the cluster 4 are preferably arranged inside the radially outer wall 21 and outside the radially inner wall 22, so as to surround the radially inner wall 22.

The radially inner wall 22 is preferably a tubular wall, so as to define therein the central ventilation channel 6. Conveniently, the walls 21, 22 are perforated to allow the air, preferably sucked by the central ventilation channel 6, to pass. The walls 21 and 22 belong to the cluster 4 which is a sort of donut with the bottom made of electrically conductive material (the rechargeable cells 5 may be extracted by extracting the clusters 4 from the tubular container 2 and removing the rechargeable cells 5 from the side opposite to the conductive bottom).

The container body 20 of the cluster 4 is, for example, transversely closed on one side by at least one electrical interconnection partition 7, with the possibility of being also transversely closed on two opposite sides by a pair of electrical interconnection partitions 7. Said electrical interconnection partition 7 or said pair of partitions 7 may be fastened to the container body 20 of the cluster 4, for example, by means of one or more attachment elements, for example removable attachment elements, for example, by means of interlocking attachment elements, in particular interlocking snap-attachment elements, such as, for example, teeth, fins, raised elements and mating engagement seats.

In embodiments, the electrical connection elements 7 may however be free from the containment body 20 and be simply held in position inside the tubular container 2 since they are interposed tightly between adjacent clusters 4.

Although in Figure 3 a containment body 20 of the cluster 4 has been shown, onto which two electrical interconnection partitions 7 are fastened, it must be considered that in an alternative embodiment it is possible to fasten only one electrical interconnection partition 7 to the containment body 20, since the electrical interconnection partition 7 opposed thereto may belong to the containment body 20 of an adjacent cluster 4. Moreover, although the provision of a radially outer wall 21 and of a radially inner wall 22 has been described with reference to the embodiment of Figures 3 and 4, it should be observed that the provision of an inner wall and of an outer wall is possible also in the embodiment of Figures 1 and 2. In other words, in this case the tubular container 2 would have a radially outer wall 42 and a radially inner wall 41 and the central ventilation channel 6, when provided, would be the channel defined at the inside of the radially inner wall 42.

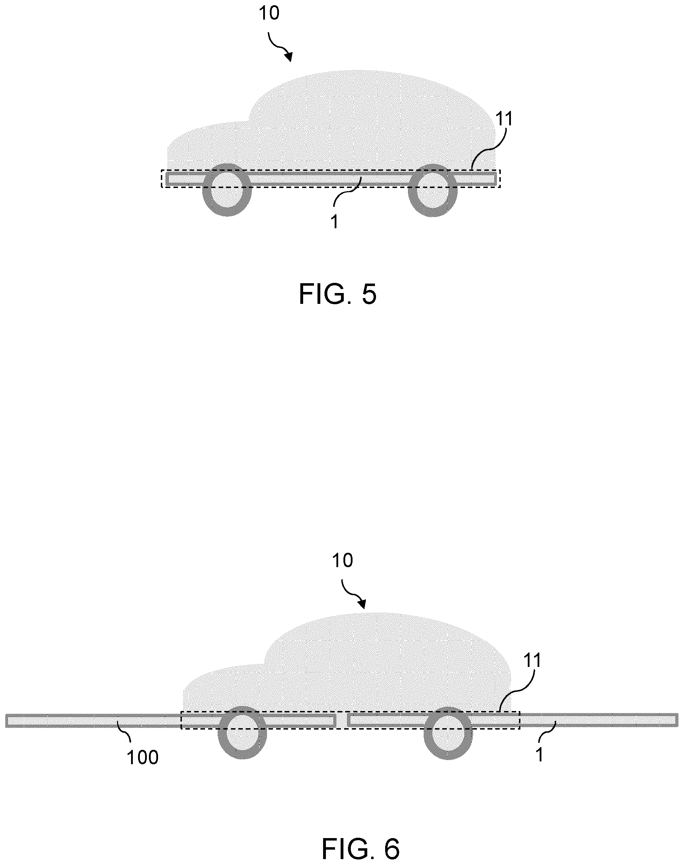

With reference to Figures 5 and 6, a non-limiting example of an exchange of a discharged or deteriorated battery pack 1 installed on board a transport vehicle 10, with a charged battery pack 100 available at an exchange station, not shown in the Figures, will be explained below. The charged battery pack 100 is quite similar, in the structure thereof, to the battery pack 1 described up to now.

The discharged or deteriorated battery pack 1 is installed in an accommodation seat 11 of the transport vehicle 10, for example, in a cavity defined in the floor of the frame of the transport vehicle 10. The transport vehicle 10 is, for example, an electric or hybrid traction car or van.

For example, the discharged or deteriorated battery pack 1 is accommodated inside a housing channel defined in the transport vehicle 10 and in particular in the accommodation seat 11, inside which the battery pack 1 is free to slide to be extracted from the vehicle 10. In accordance with an advantageous embodiment, the accommodation seat 11 of the transport vehicle and/or the tubular container 2 comprise one or more elements adapted to facilitate the sliding of the tubular container 2 into the accommodation seat 11, such as, for example, wheels or bearings, for example arranged on one or more external walls of the tubular container 2.

The aforesaid accommodation channel preferably extends between two open end portions opposite to each other, arranged on two sides of the vehicle 10 opposite to each other. Thereby, advantageously, the discharged or deteriorated battery pack 1 may be automatically extracted from the vehicle 10 by inserting the charged battery pack 100 through one of the aforesaid open end portions. In such case, the extraction of the discharged or deteriorated battery pack 1 occurs due to the thrust exerted by the charged battery pack 100 which determines a sliding of the discharged battery pack 1 inside the aforesaid accommodation channel, thus making it possible to extract the discharged or deteriorated battery pack 1. It should be noted that such exchange operation of the battery pack 1 may also be carried out during a low speed travel of the vehicle 10, for example, during a vehicle travel at a speed which is not zero and less than 3 km/h. Clearly, it is also possible to think of an embodiment in which the exchange of the battery pack 1 is carried out with a stationary vehicle, for example by providing in the exchange station an insertion device which pushes a charged battery pack 100 into the accommodation seat of the vehicle 10 to eject the discharged battery pack 1 from the vehicle 10. It is also possible to provide for the replacement of the rechargeable battery pack 1 with other methods, for example, from a side of the transport vehicle.

Referring now again to Figure 1, in accordance with an advantageous embodiment, the rechargeable battery pack 1 comprises means 9 for reading the voltage of the rechargeable cells 5 and/or of the clusters 4, for example, being a respective reading means 9 associated with or fastened to each rechargeable cell 5 or each cluster 4. The aforesaid reading means 9 preferably comprise a wireless transponder, for example, an RFID tag, associated with each rechargeable cell 2 or with each cluster of cells 4.

Thereby, once the rechargeable battery pack 1 has been extracted from the transport vehicle 10, or even simultaneously with the extraction thereof, it is advantageously possible to query the reading means 9 with querying means to identify the rechargeable cells 5 or the clusters of cells 4 which, instead of being charged, need to be replaced.

Furthermore, even if the rechargeable battery pack does not have the aforesaid reading means 9, the voltage reading of each single cluster 4 may be carried out by taking advantage of the edges of the electrical interconnection partitions 7, since these are electrically conductive. Advantageously, the voltage reading of the clusters 4 may be carried out without disassembling them, for example, simply by contacting the electrical interconnection partitions 7, while the voltages of the rechargeable cells 5 may be measured individually by removing the partitions 7.

It should be noted that the above description of the rechargeable battery pack 1 (or 100) also corresponds to the description of an installation method of a first rechargeable battery pack 100 on board an electric or hybrid traction transport vehicle 10, in which the transport vehicle 10 comprises an accommodation seat 11 having an access opening and in which the installation method comprises the steps of:
- establishing a relative axial alignment between said first rechargeable battery pack 100 and said access opening;
- determining a relative sliding along said axis of main longitudinal extension X-X between the first rechargeable battery pack 100 and the transport vehicle 10 to insert said first rechargeable battery pack 100 in said accommodation seat 11.

In accordance with an advantageous embodiment, the aforesaid step of determining a relative sliding is carried out during a travelling state of the electric or hybrid traction transport vehicle 10 and/or during the sliding of an exchange station loading and unloading device with respect to the transport vehicle 10.

In accordance with a particularly advantageous embodiment, the accommodation seat 11 of the transport vehicle 10 comprises a second rechargeable battery pack 1 installed on board the transport vehicle 10 and the step of determining said relative sliding comprises an operation of pushing the second rechargeable battery pack 1 by means of the first rechargeable battery pack 100 to determine a sliding and expulsion from the transport vehicle 10 of the second battery pack 1.

Further features of the aforesaid installing method are apparent from the description given above for the rechargeable battery pack 1.

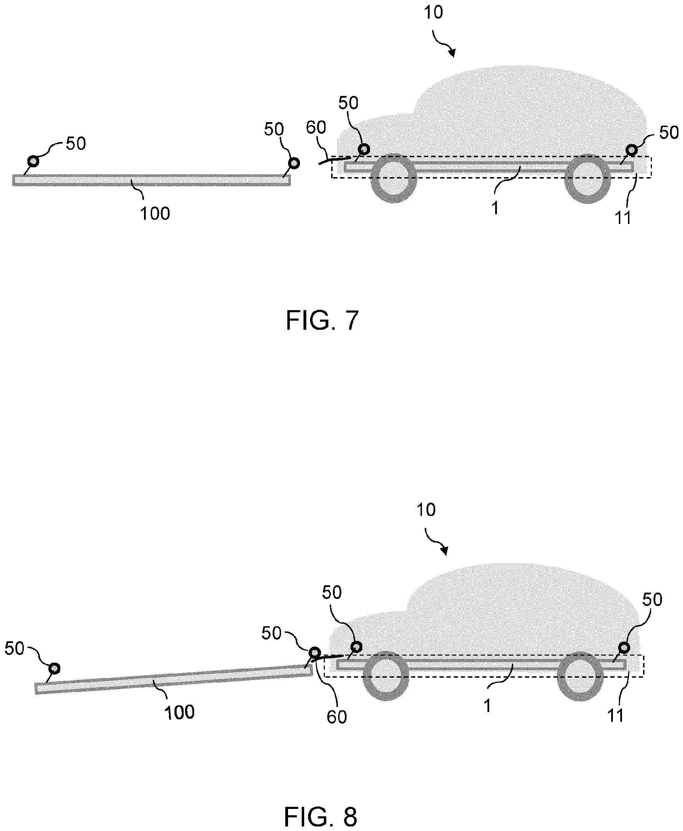

With reference to Figures 7 and 8, it is possible to provide one or more alignment elements 50 between the rechargeable battery pack 1, 100 and the housing seat 11 of the transport vehicle 10. For example, it is possible to provide on the rechargeable battery pack 1, 100 one or more wheels or bearings 50 and it is possible to provide an alignment ramp 60 associated with the housing container 11. The positions of the alignment ramp 60 and of the one or more wheels or bearings 50 can be mutually inverted. The one or more wheels or bearings 60 can also act as electrical interconnection elements, i.e. respectively as anode and cathode, between the rechargeable battery 1, 100 and the transport vehicle. Furthermore, it should be noted that the one or more wheels or bearings 50 can represent the elements described above adapted to facilitate the sliding between the rechargeable battery pack 1, 100 and the accomodation seat 11.

It should be noted that in the installation method described above it is applicable to rechargeable battery packs different from the above embodiments of rechargeable battery packs described above. For example, the above installation method can be applied to plate-like battery packs, or those having a parallelepiped, cylindrical, etc. shape.

From the above it is apparent that a rechargeable battery pack 1 as described above allows to achieve the intended objects in terms of overcoming the drawbacks of the rechargeable battery packs of the prior art. In fact, the rechargeable battery pack 1 described above considerably facilitates the battery pack charging and/or replacement operations and, by virtue of the possibility of replacing the single rechargeable cells 4 or the single clusters of cells 4, it is possible to obtain undoubted advantages in terms of efficiency and environmental terms.

Finally, it should be noted that, although an example of installation on board a transport vehicle has been in particular described, a rechargeable battery pack 1 of the type described above may also be advantageously used in other applications. For example, it may be used in the electrical networks of domestic buildings, for example, using rechargeable cells which, over time, have lost part of the efficiency thereof, since in these applications, rechargeable battery packs less performing with respect to the requirements may be used in the automotive field.

Without prejudice to the principle of the invention, the embodiments and details of construction may be widely varied with respect to what has been described and illustrated purely by way of non-limiting example, without thereby departing from the scope of the invention as defined in the accompanying claims.

In particular, the same concepts can be useful if the cells with which the various clusters are made are plate-like rather than cylindrical. In this case the clusters may not even comprise a plurality of rechargeable cells but also a single rechargeable cell. The battery pack to be replaced could also be made by placing several prismatic tubes side by side.

## Claims

1. A rechargeable battery pack (1), comprising:
- a tubular container (2) extending about a containment housing (3) along an axis of main longitudinal extension (X-X);
- a plurality of clusters (4) of rechargeable cells (5), the clusters (4) of said plurality being electrically connected in series with one another and being arranged inside the containment housing (3) of the tubular container (2) axially aligned with one another along said axis having of main longitudinal extension (X-X);
wherein each cluster (4) comprises a plurality of rechargeable cells (5) arranged about said axis of main longitudinal extension (X-X) connected in parallel with one another and wherein, inside the same cluster (4), the rechargeable cells are arranged parallel to said axis of main longitudinal extension (X-X).

2. A rechargeable battery pack (1) according to claim 1, wherein, inside the same cluster (4), the rechargeable cells (5) are arranged around a central ventilation channel (6).

3. A rechargeable battery pack (1) according to claims 1 or 2, wherein the tubular container (2) has a circular or polygonal cross-section.

4. A rechargeable battery pack (1) according to any one of the preceding claims, comprising a plurality of at least partially elastic electrical interconnection partitions (5), each electrical interconnection partition (7) being interposed between two adjacent clusters (4) inside said tubular container (2).

5. A rechargeable battery pack (1) according to claim 4, wherein said electrical interconnection partitions (7) have at least one ventilation hole.

6. A rechargeable battery pack (1) according to any one of the preceding claims, wherein clusters (4) are removably and slidably accommodated in the tubular container (3) to allow the replacement of single rechargeable cells (2) or clusters of cells (4).

7. A rechargeable battery pack (1) according to any one of the preceding claims, wherein the tubular container (2) comprises a radially outer wall (41) and a radially inner wall (42) and wherein the rechargeable cells (5) are arranged inside the radially outer wall (21) and outside the radially inner wall (22).

8. A rechargeable battery pack (1) according to any one of the preceding claims, wherein the containment housing (3) is transversely delimited by the tubular container (2) for the whole extension of the containment housing (3) along the longitudinal axis (X-X).

9. An electric or hybrid traction transport vehicle (10) comprising an accommodation seat (11) and a rechargeable battery pack (1) according to any one of the preceding claims, which is removably and slidably inserted in the accommodation seat.

10. Installation method of a first rechargeable battery pack (100) according to any one of claims 1 to 8 on board an electric or hybrid traction transport vehicle (10), wherein the transport vehicle (10) comprises an accommodation seat (11) having an access opening, wherein the method comprises the steps of:
- establishing a relative axial alignment between said first rechargeable battery pack (100) and said access opening;
- determining a relative sliding along said axis having of main longitudinal extension (X-X) between the first rechargeable battery pack (100) and the transport vehicle (10) to insert said first rechargeable battery pack (100) in said accommodation seat of the transport vehicle (10).

11. An installation method according to claim 9, wherein the step of determining a relative sliding is carried out during a travelling state of the electric or hybrid traction transport vehicle (10) and/or during the sliding of an exchange station loading and unloading device with respect to the transport vehicle (10).

12. An installation method according to claims 10 or 11, wherein said accommodation seat of the transport vehicle (10) comprises a second access opening and a second rechargeable battery pack (1) installed on board the transport vehicle (10) and wherein the step of determining said relative sliding comprises an operation of pushing said second rechargeable battery pack (1) by means of said first rechargeable battery pack (100) to determine a sliding and an expulsion from the transport vehicle (10) of said second battery pack (1) through said second access opening.

13. A method according to any one of previous claims from 10 to 12, wherein the accommodation seat (11) of the transport vehicle (10) and/or the tubular container (2) comprise one or elements adapted to facilitate the sliding of the tubular container (2) in the accommodation seat (11) of the transport vehicle (10), such as for example wheels or bearings.
